# EUROPEAN PATENT APPLICATION

(11) **EP 1 753 223 A2**
(43) Date of publication of application: **14.02.2007**
(21) Application number: 06117389.4
(22) Date of filing: 18.07.2006
(51) Int. Cl.: H04N 5/20, H04N 5/57

(54) **Pixel brightness compensation**

(30) Priority: 27.07.2005 KR 2005068579
(71) Applicant: Samsung Electronics Co., Ltd., Suwon-si 442-742 Gyeonggi-Do (KR)
(72) Inventor: Jang, Dong-uk, Suwon-si, Gyeonggi-do (KR); Lee, Bong-geun, Suwon-si, Gyeonggi-do (KR)
(74) Representative: Walaski, Jan Filip

(57) **Abstract**

A video processing apparatus and method are provided where a video processor processes an image formed by a plurality of pixels having position data on a display panel to be displayed in the display panel, and a compensation factor corresponding to a distance from a centre of the display panel to a pixel is stored for each pixel. A compensation factor extractor extracts the compensation factor corresponding to the pixel from storage, based on the position data of the pixel, and a compensator compensates brightness of each pixel based on the extracted compensation factor. The video processing apparatus and method provide for display of video images with adequate brightness depending on the displaying and viewing positions.

## Description

The present invention relates to a video processing apparatus and a video processing method. More particularly, the present invention relates to a video processing apparatus and a video processing method, which can display video images with adequate brightness depending on their positions and a viewer's position.

Video processing apparatus, such as a television (TV), receives video signals from digital TV broadcast programs, cable TV broadcast programs or from various video instruments including digital cameras and game consoles, and processes the video signals for display.

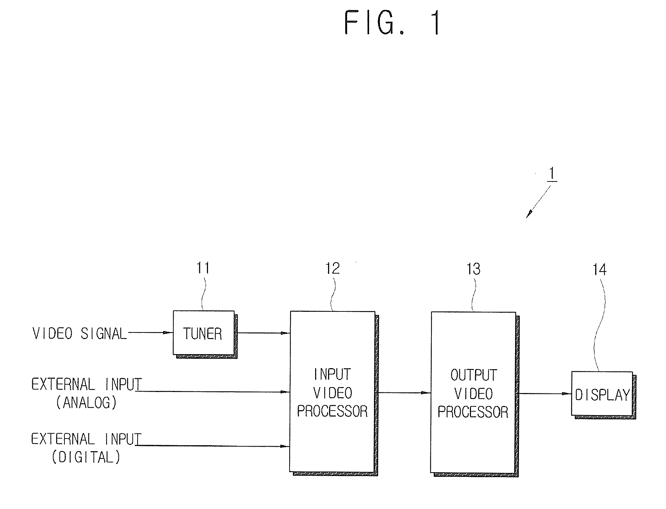

Figure 1 illustrates a conventional video processing apparatus. The video processing apparatus 1 shown in Figure 1 comprises a tuner 11, an input video processor 12, an output video processor 13 and a display 14. The tuner 11 receives video signals corresponding to the frequency of a specific channel determined by a user by tuning. The input video processor 12 receives analog or digital input video signals from the tuner 11 or from an external device, and performs signal processing operations such as a video decoding, an analog-to-digital conversion, etc. The output video processor 13 receives the video signals processed by the input video processor 12 and performs signal processing such as scaling, deinterlacing, and picture enhancement, so as to appropriately display images on the display 14. The display 14 displays video images based on the video signals processed by the output video processor 13.

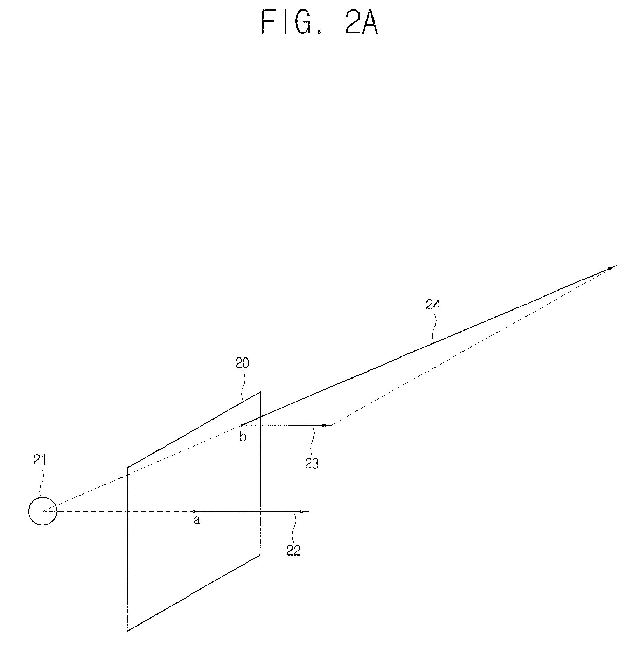

As shown in Figure 2A, the display 14 may comprise a display panel 20 that displays the video images and a light source 21 that emits light to display the video images. If light emitted from the light source 21 comes from different angles, as in CRT (cathode ray tube) and PDP (plasma display panel), the video images may be viewed with different brightness according to positions on the display panel 20 due to linearity of light. For example, in order to display a video image on the edge (b) of the display panel 20 with the same brightness 22 and the same size as those of one displayed on the centre (a) of the display panel 20, it needs light of a substantially stronger intensity than the brightness 22 of the image (see numerals 22, 23 and 24). That is, in case that a viewer sees images displayed on the display panel 20 at the same position, the viewer sees darker images on the edge (b) of the display panel 20 than at the centre (a). Progressing further from the centre, the difference in brightness of the image becomes larger.

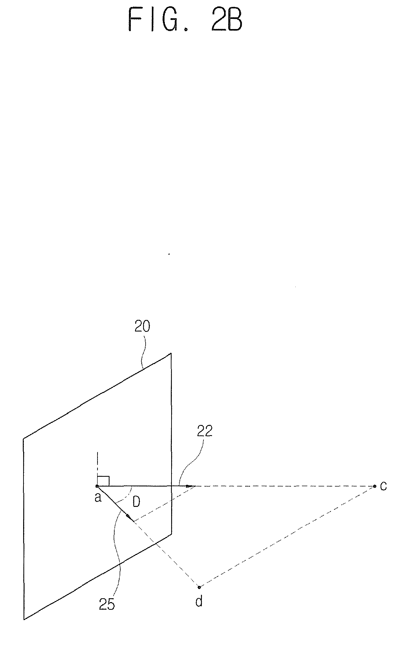

In case that the viewer sees the images displayed at the same position of the display panel 20 from different viewer positions, the video image may be viewed with different brightness due to the linearity of light. For example, as shown in Figure 2B, in case that an image displayed at a position (a) of the display panel 20 is viewed at a viewing position (c) in a direction perpendicular to the display panel 20, a brightness 25 of the image when it is viewed at a viewing position (d) tilted at an angle of D with respect to the direction orthogonal to the display panel 20 is darker than that 22 when it is viewed at the viewing position (c) in a direction orthogonal to the display panel 20. That is to say, as the angle to the display panel 20 at which the viewer watches increases, the brightness from the viewer's perspective decreases.

Accordingly, it is an aspect of the present invention to provide a video processing apparatus and a video processing method, which may display video images with adequate brightness depending on the displaying and viewing positions.

Additional exemplary features of the present invention will be set forth in the description which follows, and in part will be apparent from the description, or may be learned by practice of the invention.

The foregoing and/or other exemplary aspects of the present invention can be achieved by providing, for example, a video processing apparatus comprising a display panel, a video processor that processes an image formed by a plurality of pixels having position data on the display panel to be displayed in the display panel, a compensation factor storage in which a compensation factor corresponding to a distance from a centre of the display panel to a pixel is stored for each pixel, a compensation factor extractor that extracts the compensation factor corresponding to the pixel from the compensation factor storage, based on the position data of the pixel, and a compensator that compensates brightness of each pixel based on the extracted compensation factor.

According to an exemplary aspect of the present invention, the compensation factor comprises a lateral compensation factor corresponding to a pixel row in a lateral direction of the display panel and a longitudinal compensation factor corresponding to a pixel column in a longitudinal direction of the display panel. The compensator performs the compensation based on a product of the lateral compensation factor and the longitudinal compensation factor corresponding to each pixel.

According to an exemplary aspect of the present invention, the memory further stores an angle weight factor corresponding to a view angle between a viewing direction toward the centre of the display panel and a line perpendicular to the centre of the display panel. The video processing apparatus may further comprise a controller that controls the compensation factor extractor so that it extracts the angle weight factor corresponding to the view angle determined by the viewer from the memory. A compensator compensates the brightness of each pixel based on the extracted angle weight factor.

The foregoing and/or other exemplary aspects of the present invention can be achieved by providing a video processing apparatus comprising a display panel, a video processor that processes an image formed by a plurality of pixels having position data on the display panel to be displayed in the display panel, a compensation factor storage in which an angle weight factor corresponding to a view angle between a viewing direction and a line perpendicular to a centre of the display panel is stored, a compensation factor extractor that extracts the angle weight factor from the compensation factor storage, a compensator that compensates brightness of each pixel based on the extracted angle weight factor, and a controller that controls the compensation factor extractor so that it extracts the angle weight factor corresponding to the view angle determined by the viewer from the compensation factor storage.

The foregoing and/or other exemplary aspects of the present invention can be achieved by providing a video processing method in a video processing apparatus having a display panel, and a video processor that processes an image formed by a plurality of pixels having position data on the display panel to be displayed in the display panel. An exemplary video processing method comprises storing a compensation factor of each pixel corresponding to a distance from a pixel to a centre of the display panel in the memory, extracting the compensation factor corresponding to the pixel processed by the video processor from the memory, and compensating brightness of the pixel based on the extracted compensation factor. According to an exemplary aspect of the present invention, the compensation factor comprises a lateral compensation factor corresponding to a pixel row in a lateral direction of the display panel and a longitudinal compensation factor corresponding to a pixel column in a longitudinal direction of the display panel, and the compensator performs the compensation based on a product of the lateral compensation factor and the longitudinal compensation factor.

According to an exemplary aspect of the present invention, in the storing of the compensation factor, an angle weight factor corresponding to a view angle between a viewer and a line perpendicular to the centre of the display panel is further stored in the memory, the video processing method further comprises extracting the angle weight factor corresponding to the view angle determined by the viewer from the memory, and the compensating of the brightness of each pixel compensates the brightness of each pixel based on the extracted angle weight factor.

The foregoing and/or other exemplary aspects of the present invention can be achieved by providing a video processing method in a video processing apparatus having a display panel, and a video processor that processes an image formed by a plurality of pixels having position data on the display panel to be displayed in the display panel, the video processing method comprising storing an angle weight factor corresponding to a view angle between a viewing direction and a line perpendicular to a centre of the display panel in the memory, extracting the angle weight factor from the memory, and compensating brightness of the pixel based on the extracted angle weight factor.

The above and/or other exemplary aspects and advantages of the prevent invention will become apparent and more readily appreciated from the following description of the exemplary embodiments, taken in conjunction with the accompany drawings, in which like reference numerals will be understood to refer to like parts, components and structures, where:
Figure 1 is a block diagram illustrating the construction of a conventional video processing apparatus;
Figures 2A and 2B illustrate characteristics of a conventional video processing apparatus;
Figure 3 is a block diagram illustrating the construction of the video processing apparatus according to an exemplary embodiment of the present invention;
Figures 4A, 4B, 5A and 5B illustrate compensation factor and angle compensation factor stored in a memory in accordance with exemplary embodiments of the present invention; and
Figure 6 is a flowchart illustrating the operation of the video processing apparatus in accordance with an exemplary embodiment of the present invention.

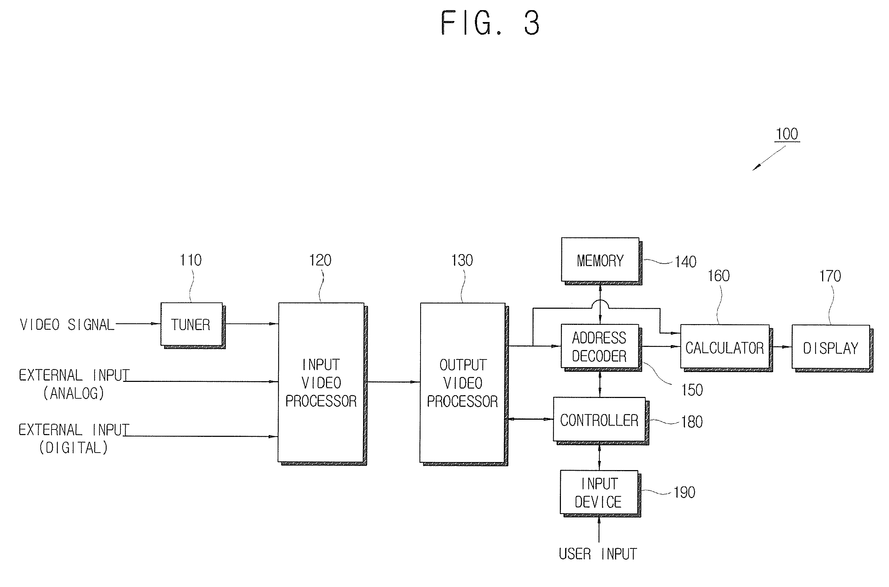

Figure 3 is a block diagram illustrating a construction of video processing apparatus 100 according to an exemplary embodiment of the present invention. This video processing apparatus may be incorporated into, for example, a TV. It receives video signals from digital TV programs or cable TV programs or from a variety of video instruments including digital cameras and game consoles, and processes the video signals for display. The video processing apparatus according to an exemplary embodiment of the present invention displays video images with optimum brightness by compensating the image brightness depending on the positions of images and viewers.

As shown in Figure 3, the video processing apparatus 100 according to an exemplary embodiment of the present invention comprises a tuner 110, an input video processor 120, an output video processor 130, a memory 140, an address decoder 150, a calculator 160, a display 170, a controller 180 and an input device 190. The tuner 110 receives video signals corresponding to the frequency of the specific channel determined by the user by tuning. The input video processor 120 receives analog or digital input video signals received from the tuner 110 or from an external device, and performs signal processing such as video decoding, analog-to-digital conversion, and so on. The output video processor 130 receives the video signals processed by the input video processor 120, and processes them appropriately for being displayed by the display 170, including scaling, deinterlacing, picture enhancement, and so on. The display 170 displays video images using the video signals processed by the output video processor 130. The display 170 comprises a display panel similar to the display panel 20 as shown in Figure 2A. The output video processor 130 is an example of a video processor according to an exemplary embodiment of the present invention.

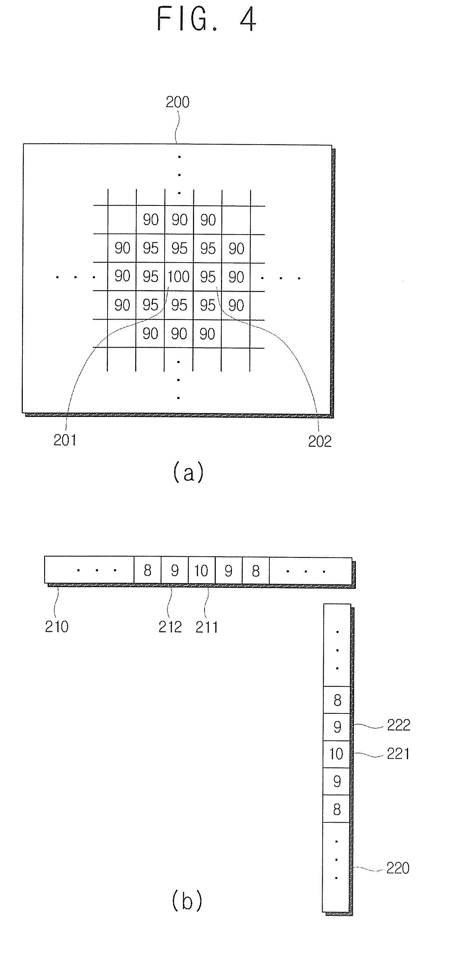

Compensation factors corresponding to a distance from a centre of the display panel (referring to (a) of Figure 2A) to each pixel forming a video image are stored in the memory 140. Figure 4A shows the compensation factor value stored in the memory 140. As shown in Figure 4A, the largest compensation factor value for a central pixel 201 in the display panel 200 of the display 170 is stored in the memory 140, and the value reduces as the image is farther from the centre of the display panel 200. For example, a compensation factor of 100 may be stored in the memory 140 for the central pixel 201, a compensation factor of 95 for a secondpixel 202 neighbouring the central pixel 201, and a compensation factor of 90 for a third pixel neighbouring the second pixel 202.

The address decoder 150 extracts each compensation factor corresponding to each pixel from the memory 140, based on position data of each pixel processed by the output video processor 130. In an exemplary embodiment of the present invention, the position data of each pixel shows lateral and longitudinal positions of the each pixel in a video image formed by each of the pixels. The position data of each pixel are included in the video signal. The address decoder 150 accesses an address of a memory area in which the compensation factors corresponding to the lateral and longitudinal positions of each pixel are stored, and reads a corresponding compensation factor. The address decoder 150 is an example of a compensation factor extracting unit according to an exemplary embodiments of the present invention.

The calculator 160 receives the video signal and the compensation factor from the output video processor 130 and the address decoder 150, respectively, and compensates the brightness of each processed pixel based on the input compensation factor. That is, the calculator 160 normalizes the compensation factor corresponding to each pixel and multiplies the inverse valueof the normalized compensation factor by a pixel value of the pixel. Referring to Figure 4A, for example, the calculator 160 normalizes the compensation factor of 100 for the pixel 201 corresponding to the centre of the display panel 200 by dividing by 100, and then multiplies a pixel value of the pixel 201 by its inverse value1 (100/100). And, for the second pixel 202, the calculator 160 normalizes the compensation factor of 95 by dividing by 100 and then multiplies a pixel value of the second pixel 202 by its inverse value 100/95. The calculator 160 is an example of a compensator according to an exemplary embodiment of the present invention. According to an exemplary embodiment of the present invention, compensation is performed appropriately depending on the position on the display panel 200, and thus the viewer can see images with uniform brightness regardless of the position of the images.

In another exemplary embodiment, referring to Figure 4B, a lateral compensation factor corresponding to a pixel row 210 in a lateral direction of the display panel 200 and a longitudinal compensation factor corresponding to a pixel column 220 in a longitudinal direction of the display panel 200 may be stored in the memory 140. For example, for the pixel row 210, the lateral compensation factor stored in the memory 140 may be largest at the centre and smallest at the edge. Also, for the pixel column 220, the longitudinal compensation factor may be largest at the centre and smallest at the edge.

In this case, the address decoder 150 reads each lateral compensation factor and longitudinal compensation factor corresponding to the position data of each pixel from the memory 140. The calculator 160 multiplies the lateral compensation factor by the longitudinal compensation factor to obtain a compensation factor, normalizes the compensation factor and multiplies a pixel value of a corresponding pixel by an inverse number of the normalized compensation factor. For example, referring to Figure 4B, the calculator 160 receives a lateral compensation factor of 10 and a longitudinal compensation factor of 10 for the pixel 211 and 221 corresponding to the centre of the display panel 200, multiplies them to obtain a compensation factor of 100, normalize it by dividing by 100 and then multiplies a pixel value of the pixel 211 and 221 by its inverse value 1. This exemplary method may be advantageous in that a size of the memory 100 for storing the compensation factors can be reduced.

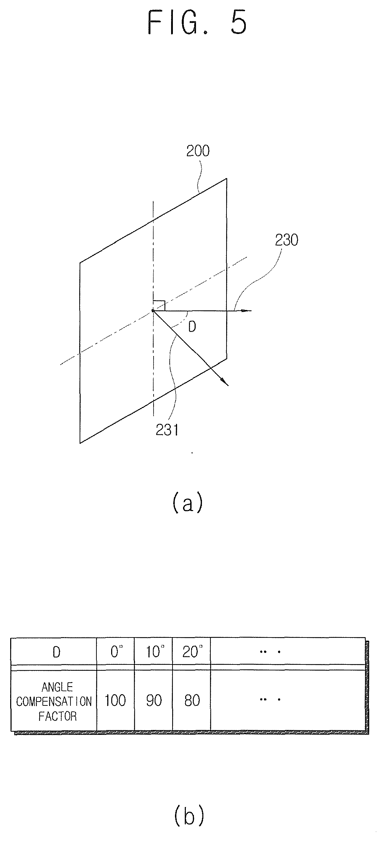

Referring to Figure 5(a), an angle weight factor for a view angle D of a viewing direction 231 from a line 230 perpendicular to the centre of the display panel 200 may be further stored in the memory 140. As shown in Figure 5(b), an angle compensation factor that decreases as the view angle D increases may be stored in the memory 140.

The controller 180 controls the address decoder 150 so that it reads an angle weight factor, from the memory 140, corresponding to the view angle D selected by the viewer through the input device 190. The controller 180 may comprise a computer program executed by a microprocessor such as a CPU. The calculator 160 normalizes the angle weight factor read by the address decoder 150 and multiplies the pixel value of the corresponding pixel by an inverse of the normalized value. For example, if the view angle D is 20°, the calculator 160 normalizes the angle compensation factor of 80, which is input from the address decoder 150, by dividing it by 100 and multiplies the pixel value of the pixel by its inverse value of 100/80. According to an exemplary implementation of the present invention, the viewer can view video images with uniform brightness, regardless of his/her position.

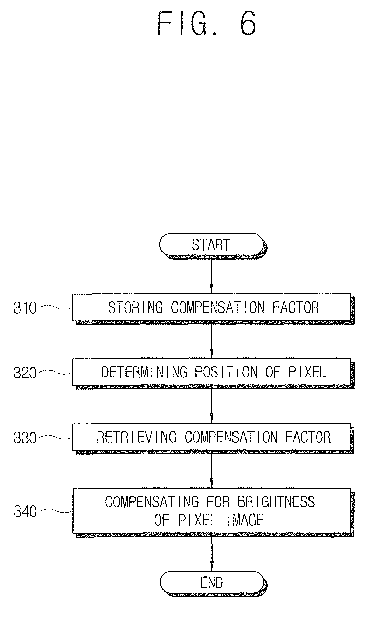

Figure 6 is a flowchart schematically illustrating the operation of the video processing apparatus 100 according to an exemplary embodiment of the present invention. The video processing apparatus 100 stores the compensation factor corresponding to the position of the image on the display panel 200 in the memory 140 at operation S310. The video processing apparatus 100 may further store the angle compensation factor corresponding to the position of the viewer.

The video processing apparatus 100 determines the position of the pixel on the display panel based on the position data included in the video signal at operation S320. The video processing apparatus 100 extracts the compensation factor corresponding to the determined position of pixel from the memory 140 at operation S330. Then, the video processing apparatus 100 compensates for the brightness of the corresponding pixel based on the extracted compensation factor at operation S340.

As apparent from the above description, the video processing apparatus and the video processing method according to exemplary embodiments of the present invention are capable of displaying video images with adequate brightness, considering the positions of the image and the viewer.

Although a few exemplary embodiments of the present invention have been shown and described, it will be appreciated by those skilled in the art that changes may be made in those embodiments without departing from the principles of the invention, the scope of which is defined in the appended claims.

## Claims

1. Apparatus for adjusting pixel brightness, comprising:
means for storing a compensation factor for a pixel of a display panel;
means for retrieving the stored compensation factor corresponding to a pixel to be displayed at a given position on the display panel; and
means for adjusting brightness of the pixel based on the compensation factor.

2. Apparatus according to claim 1, wherein the compensation factor relates to a position of the pixel on the display panel.

3. Apparatus according to claim 1 or 2, wherein the compensation factor corresponds to a distance from the pixel to a centre of the display panel.

4. Apparatus according to any one of the preceding claims, wherein the compensation factor relates to a view angle at which a viewer is to view the display panel.

5. Apparatus according to any one of the preceding claims, further comprising:
a display panel;
a video processor that processes an image formed by a plurality of pixels, at least one of the pixels comprising position data corresponding to a position of the at least one pixel on the display panel;
a memory that stores for at least one of the pixels a compensation factor corresponding to a distance of the at least one pixel from a centre of the display panel;
a compensation factor extractor that extracts the compensation factor corresponding to a pixel of the plurality of pixels from the memory, based on the position data of the pixel; and
a compensator that compensates brightness of the pixel based on the extracted compensation factor corresponding to the pixel.

6. Apparatus according to any one of the preceding claims, wherein the compensation factor comprises:
a lateral compensation factor corresponding to a pixel row in a lateral direction of the display panel; and
a longitudinal compensation factor corresponding to a pixel column in a longitudinal direction of the display panel; and
wherein the brightness adjusting means is arranged to adjust the brightness of the pixel based on a product of the lateral compensation factor and the longitudinal compensation factor.

7. Apparatus according to any one of the preceding claims, wherein the compensation factor comprises an angle weight factor corresponding to a view angle between a viewing direction toward the centre of the display panel and a line perpendicular to the centre of the display panel, wherein
the apparatus further comprises a controller for controlling retrieval of the angle weight factor corresponding to a selected view angle, and
the brightness adjusting means compensates the brightness of each of the plurality of pixels based on the extracted angle weight factor.

8. Apparatus according to any one of claims 1 to 4, comprising:
a display panel;
a video processor that processes an image formed by a plurality of pixels, at least one of the pixels comprising position data corresponding to a position of the at least one pixel on the display panel;
a memory that stores for at least one of the pixels an angle weight factor corresponding to a view angle between a viewing direction and a line perpendicular to a centre of the display panel;
a compensation factor extractor that extracts the angle weight factor from the memory;
a compensator that compensates brightness of a pixel based on the extracted angle weight factor; and
a controller that controls the compensation factor extractor to extract from memory an angle weight factor corresponding to a selected view angle.

9. A video processing method comprising:
storing a compensation factor for at least one pixel of a display panel;
extracting the stored compensation factor corresponding to a pixel processed by a video processor; and
compensating brightness of the pixel processed by the video processor based on the extracted compensation factor.

10. A method according to claim 9, wherein the compensation factor corresponds to a distance from the at least one pixel to a centre of the display panel.

11. A method according to claim 9 or 10, wherein the compensation factor comprises:
a lateral compensation factor corresponding to a pixel row in a lateral direction of the display panel; and
a longitudinal compensation factor corresponding to a pixel column in a longitudinal direction of the display panel; and
wherein compensating the brightness of the pixel comprises performing a compensation based on a product of the lateral compensation factor and the longitudinal compensation factor.

12. A method according to any one of claims 9 to 11, further comprising:
storing an angle weight factor corresponding to a view angle between a viewing direction and a line perpendicular to the centre of the display panel; and
extracting the stored angle weight factor corresponding to a selected view angle; wherein
compensating the brightness of the pixel further comprises compensating the brightness of the pixel based on the extracted angle weight factor.

13. A video processing method comprising:
storing an angle weight factor corresponding to a view angle between a viewing direction and a line perpendicular to a centre of a display panel;
extracting the stored angle weight factor; and
compensating brightness of a pixel of the display panel based on the extracted angle weight factor.
